# EUROPEAN PATENT APPLICATION

(11) **EP 4 411 222 A1**
(43) Date of publication of application: **07.08.2024**
(21) Application number: 22876419.7
(22) Date of filing: 29.09.2022
(51) Int. Cl.: F23G 5/00, F23G 5/02, F23G 5/44

(54) **METHOD FOR OPERATING MELTING FURNACE, AND MELTING FURNACE**

(30) Priority: 30.09.2021 JP 2021161337
(71) Applicant: KUBOTA CORPORATION, Osaka-shi, Osaka 556-8601 (JP)
(72) Inventor: INOUE, Shigenori, Amagasaki-shi, Hyogo 661-8567 (JP); HOSHO, Fumiki, Amagasaki-shi, Hyogo 661-8567 (JP)
(74) Representative: Betten & Resch
(86) International application number: PCT/JP2022/036359
(87) International publication number: WO 2023/054553

(57) **Abstract**

Provided is a method for operating a melting furnace, with which it is possible to increase recovery efficiency of a useful metal contained in a treatment target. The method for operating a melting furnace includes: a furnace chamber 4 in which a treatment target containing a useful metal is supplied from an upstream side, the treatment target is melt-treated from a surface of the treatment target with a heating mechanism 8 provided to a furnace ceiling 5 to produce molten slag, and the molten slag is caused to flow down to a downstream side; and a slag port 7 discharging the molten slag flowed down. The method includes supplying a matrix particle containing a metal component forming an alloy with the useful metal in a molten state, to thereby cause a molten metal generated by the melt-treatment to aggregate in the matrix particle.

## Description

### Technical Field

The present invention relates to a method for operating a melting furnace, and a melting furnace.

### Background Art

Miscellaneous waste, such as organic sludge such as sewage sludge, livestock excreta, or methane fermentation residues from food waste; a combustible material such as plastic, paper, SRF (Solid Recovered Fuel), or recycling residues containing plastic and metal; and an incombustible material such as incinerated ash, contaminated soil, waste glass, waste pottery, or asbestos, is melt-treated as a treatment target in a melting furnace.

For example, the miscellaneous waste is melt-treated by a surface melting furnace including a furnace chamber in which a slag port is formed, and a treatment-target supply mechanism for supplying the treatment target toward the furnace chamber, the surface melting furnace configured to melt the treatment target supplied to the furnace chamber by the treatment-target supply mechanism from a surface thereof, and cause it to flow down to the slag port.

In such a melting furnace, the inside of the furnace is adjusted to a reducing atmosphere in order to volatilize heavy metals contained in the treatment target to remove them from slag.

In addition, Patent Literature 1 proposes a surface melting furnace that suppresses the volatilization of phosphorus contained in a treatment target during a melt-treatment. The surface melting furnace is configured to include: a furnace chamber in which a burner and an air supply mechanism are disposed and a slag port is formed; and a treatment-target supply mechanism for supplying the treatment target to the furnace chamber from a treatment-target container provided communicating with the furnace chamber. The treatment target contains phosphorus and a combustible material. The surface melting furnace includes an edge portion air-supply mechanism for supplying air toward a surface of the treatment target in the furnace chamber, the surface being adjacent to a portion in which the treatment-target container communicates with the furnace chamber.

According to the surface melting furnace, the air supplied from the edge portion air-supply mechanism toward the surface of the treatment target causes a fixed carbon content remaining on the portion adjacent to the surface of the treatment target due to the thermal decomposition of the combustible material to combust. The remainder of oxygen further suppresses reduction reactions of phosphorus compounds or phosphorus oxides, and thus suppresses the volatilization of phosphorus.

Patent Literature 2 proposes a method for melt-treating a phosphorus-containing material, including suppressing the volatilization of a phosphorus component contained in the phosphorus-containing material to exhaust gas, and capturing the phosphorus component in slag during the melt-treatment of the phosphorus-containing material such as sewage sludge. The method for melt-treating includes the following steps: a pretreatment step for adjusting a moisture content for the phosphorus-containing material containing 0.04 wt% or more phosphorus in dry substance equivalent; a melting step for supplying the phosphorus-containing material whose moisture content adjusted in the pretreatment step into a melting furnace to melt; and a cooling step for cooling and solidifying the slag produced by melting in the melting step.

The method for melt-treating further performs an iron compound adding step for adding divalent or trivalent iron compounds to the phosphorus-containing material in or before or after the pretreatment step, thereby preventing the volatilization of the phosphorus component contained in the phosphorus-containing material in the melting step, and also capturing the phosphorus component in the slag while suppressing the migration of the phosphorus component into metal phosphorus compounds, for example, iron phosphide.

When such a mixture of the divalent or trivalent iron compounds and the phosphorus-containing material are supplied into the melting furnace, the supplied ferrous oxide (FeO) or ferrous oxide (FeO) produced from the divalent or trivalent iron compounds in the melting process causes a melting point lowering effect. Therefore, for example, at a melting temperature of about 1300°C, a melting flow rate of 60% or more can be secured over a wider range than the preferred basicity of 0.4-0.8 of the phosphorus-containing material to iron, and the volatilization of phosphorus component in the material to be molten is suppressed so that phosphorus is captured in the slag in the form of non-metallic phosphorus compounds.

### Citation List

### Patent Literature

Patent Literature 1: Japanese Unexamined Patent Application Publication No. 2015-190701
Patent Literature 2: Japanese Unexamined Patent Application Publication No. 2015-033691

### Summary of Invention

### Technical Problem

The method for operating a melting furnace, including adjusting a furnace atmosphere to a reducing atmosphere to volatilize heavy metals so that heavy metals contained in a treatment target are not contained in slag, adjusting the furnace atmosphere to an oxidizing atmosphere to suppress the volatilization of a useful metal or the like, or adding a melting auxiliary agent to suppress alloying of the useful metal or the like contained in the treatment target to capture them in the slag is thus known.

By the way, it is desirable to separate and recover a specific metal contained in the treatment target from the slag during a melt-treatment of the treatment target in order to use them as recycled resources. For example, the melt-treatment causes metal, such as copper or iron to adsorb precious metals to make an alloy, which mix with the slag in a molten state. Therefore, the metal in an alloy state will be recovered by specific gravity separation after a pulverization treatment of the resulting slag.

However, the particle size of metal contained in the slag is very small, and recovery efficiency of metal by means of specific gravity separation is low, and thus there was room for improvement in terms of improving recovery efficiency of metal.

It is an object of the present invention to provide a method for operating a melting furnace, with which it is possible to increase recovery efficiency of a useful metal contained in a treatment target, and a melting furnace.

### Solution to Problem

To achieve the above object, a first feature configuration of a method for operating a melting furnace according to the present invention is that the method for operating a melting furnace includes: a furnace chamber in which a treatment target containing useful metal is supplied from an upstream side, the treatment target is melt-treated from a surface of the treatment target with a heating mechanism provided to a furnace ceiling to produce molten slag, and the molten slag is caused to flow down to a downstream side; and a slag port discharging the molten slag flowed down, and the method includes supplying a matrix particle containing either the useful metal or a metal component forming an alloy with the useful metal in a molten state, to thereby cause molten metal generated by the melt-treatment to aggregate in the matrix particle.

When the treatment target is melt-treated, the useful metal contained in the treatment target is also in the molten state and suspended in the molten slag. When the molten slag flows down toward the slag port, a small amount of useful metal in the molten state has a limited opportunity to contact each other and does not have an opportunity to grow into a larger mass. Therefore, the useful metal conventionally could not be sufficiently separated from slag by means of a sorting treatment such as specific gravity separation or magnetic separation, which is performed after solidification. However, the supply of the matrix particle into the treatment target enables the minute molten metal which is suspended in the molten slag to integrate with the useful metal contained in the molten matrix particle or form the alloy with the metal component contained in the matrix particle, thereby ensuring to have an opportunity to gradually grow into a larger mass. This effectively increases recovery efficiency of the useful metal in the subsequent sorting treatment such as specific gravity separation or magnetic separation.

In addition to the first feature configuration above, a second feature configuration of the same is that slag containing the useful metal, the metal component, or the alloy by being molten in the melting furnace is used as the matrix particle.

When the slag containing the useful metal or the metal component forming the alloy with the useful metal in the molten state is supplied into the treatment target as the matrix particle, the density of the useful metal or the metal component forming the alloy suspended in the molten slag increases, and thereby having more opportunities to contact between the molten useful metals or between the useful metal and the metal component, so that the useful metal or the alloy from the useful metal agglomerates and grows efficiently. In other words, it is intended to increase agglomeration efficiency by substantially lengthening the residence time of the molten metal contained in the slag, which is the matrix particle, in the melting furnace.

In addition to the first feature configuration above, a third feature configuration of the same is that the useful metal or the alloy separated from slag molten in the melting furnace is used as the matrix particle.

Instead of supplying the slag containing the useful metal or the metal component into the treatment target, when supplying the useful metal or the alloy combined with the useful metal and the metal component in the molten state separated from the slag molten in the melting furnace into the treatment target as matrix particle, the density of the molten metal containing the useful metal suspended in the molten slag also increases, and thereby having more opportunities to contact between the molten metals, so that the molten metal agglomerates and grows efficiently. In this case, the slag does not need to be re-molten, and thus improving energy efficiency. Note that an alloy refers to the alloy formed from the useful metal and the metal component in the molten state in the first feature configuration described above.

In addition to the first feature configuration above, a fourth feature configuration of the same is that the matrix particle is supplied on a molten surface of the treatment target which is melt-treated in the melting furnace.

When the matrix particle is supplied into the treatment target before melting, it may be difficult to uniformly disperse the matrix particle in the treatment target. However, the supply of the matrix particle on the molten surface of the treatment target supplied in the melting furnace facilitates to uniformly disperse the matrix particle in the molten slag.

In addition to the first feature configuration above, a fifth feature configuration of the same is that a reduction auxiliary agent is added to the treatment target in addition to the matrix particle.

When the reduction auxiliary agent is added to the treatment target together with the matrix particle, the reduction auxiliary agent is oxidized preferentially over the useful metal, resulting in suppressing the oxidation of the useful metal and increasing in the probability of the useful metal dripping out of the slag port in a state of the molten metal.

A feature configuration of a melting furnace according to the present invention applies the method for operating a melting furnace including any one of the first to fifth feature configurations. The melting furnace includes: a rotary surface melting furnace, the rotary surface melting furnace including: an inner cylinder dividing the furnace chamber; an outer cylinder arranged around a periphery of the inner cylinder; a storage part for a treatment target formed between the inner cylinder and the outer cylinder; and the furnace chamber in which the treatment target, which is fed out of the storage part into the furnace chamber by relative rotation of the inner cylinder and the outer cylinder, is melt-treated from a surface of the treatment target, and molten slag flows down to be discharged from the slag port formed at the center of a furnace floor; and a supply mechanism for supplying the matrix particle into the storage part or the furnace chamber.

### Advantageous Effects of Invention

As described above, the present invention can provide a method for operating a melting furnace, and a melting furnace, with which it is possible to increase recovery efficiency of a useful metal contained in a treatment target.

### Brief Description of Drawings

Fig. 1 is an illustrative diagram of a rotary surface melting furnace, which is one example of a melting furnace to which the present invention is applied.
Fig. 2 is an illustrative diagram of a rotary surface melting furnace with a supply mechanism for supplying a matrix particle.
Figs. 3Aand 3B are illustrative diagrams of a surface melting furnace showing another aspect of a melting furnace to which the present invention is applied.

### Best Mode for Carrying out the Invention

Embodiments of a method for operating a melting furnace, and a melting furnace according to the present invention will be described below.

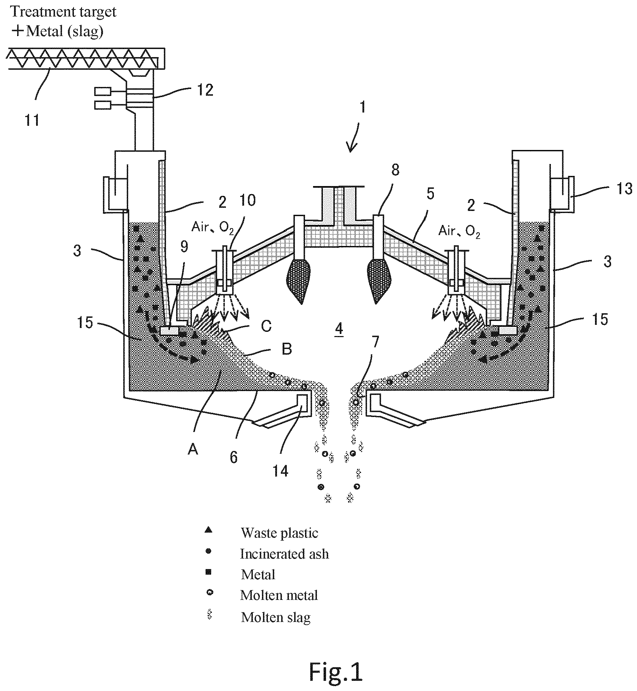

Fig. 1 shows a rotary surface melting furnace 1, which is one example of a surface melting furnace. The surface melting furnace 1 is a furnace for melt- treating miscellaneous waste as a treatment target. The treatment target includes organic sludge such as sewage sludge, livestock excreta, or methane fermentation residues from food waste, a combustible material such as plastic, paper, SRF (Solid Recovered Fuel), or recycling residues containing plastic and metal, an incombustible material such as incinerated ash, contaminated soil, waste glass, waste pottery, or asbestos, or the like. The metal includes heavy metals or the like in addition to a useful metal such as iron, nickel, copper, silver, gold, or platinum. Although a case in which a mixture of recycling residues containing plastic and metal, and incinerated ash is the treatment target will be described below, the other waste may also be included as the treatment target. Note that metal to be recovered from slag, as described herein is referred to as a useful metal, and the useful metal includes iron, nickel, copper, or the like, as well as precious metals such as silver, gold, and platinum.

The rotary surface melting furnace 1 includes an inner cylinder 2 and an outer cylinder 3 arranged concentrically, and a storage part 15 for the treatment target is formed between the inner cylinder 2 and the outer cylinder 3. A furnace ceiling 5 is provided inside the inner cylinder 2, and a furnace floor 6 is formed extending in a central direction from the lower part of the outer cylinder 3. A slag port 7 is formed at the center of the furnace floor 6, and a water-cooled cooling mechanism 14 is arranged around the slag port 7. A furnace chamber 4 is formed in a space surrounded by the inner cylinder 2, the furnace ceiling 5, and the furnace floor 6, and the respective inner walls are covered with refractories. The inner cylinder 2 and the outer cylinder 3 are configured to be airtight with a water-sealing mechanism 13.

A screw-type conveyor mechanism 11 is provided to convey the treatment target to the storage part 15, and the treatment target is fallen and supplied into the storage part 15 via a double damper mechanism 12 to prevent outside air from flowing into the furnace chamber 4.

Relative rotation of the outer cylinder 3 relative to the inner cylinder 2 causes the treatment target stored in the storage part 15 by a feeding blade 9 provided on the lower part of the inner cylinder 2 to supply into the furnace chamber 4, and thus the treatment target is distributed in a mortar shape toward the slag port 7. The inside of the furnace is heated to a high temperature of about 1300°C by two combustion burners 8 as a heating mechanism provided at a central side of the furnace ceiling 5, and thereby the treatment target is molten from a surface thereof, and flows down from an upstream side toward the slag port 7 on a downstream side. In addition, a plurality of nozzles 10 for supplying combustion air to the outside in a radial direction are provided in the furnace ceiling 5.

A combustible component such as waste plastic of the treatment target supplied into the furnace chamber 4 is first vaporized in an upstream side, and then gas combustion occurs to the treatment target with combustion air or oxygen gas which is supplied from the nozzles 10. At this time, the upstream side becomes a weakly reducing atmosphere, and thus heavy metals contained in the treatment target are reduced and volatilized, resulting in flowing down together with the exhaust gas to a secondary combustion chamber. The treatment target, which is heated by radiation heat from the combustion burners 8 and the furnace ceiling 5, is molten from the surface thereof, and flows down toward the slag port 7. At this time, the thickness of a molten layer is several tens of millimeters. The sign A as shown in Fig. 1 indicates an un-molten treatment target, the sign B indicates the molten layer, and the sign C indicates a gasification and combustion part.

Fig. 1 illustrates a diagram showing waste plastic, incinerated ash, metal, molten slag, and molten metal contained in the treatment target. The treatment target containing waste plastic, metal, and incineration ash is melt-treated in the furnace chamber 4 to be molten slag and molten metal, which drip downward from the slag port 7.

A transport mechanism providing with a water tank for cooling the molten slag is arranged below the slag port 7, and the molten slag is discharged out of the furnace as water-granulated slag. In addition, combustion gas generated in the furnace chamber 4 is burned in the secondary combustion chamber provided on a downstream side of the slag port 7, and after being purified in an exhaust gas treatment equipment, it is exhausted from a chimney to the atmosphere. The furnace chamber 4 is maintained at a negative pressure by an induced blower arranged on an upstream side of the chimney.

The melting furnace is configured to supply a matrix particle, containing a metal component that forms an alloy with the useful metal in a molten state, into the treatment target which is conveyed to the storage part 15 by the screw-type conveyor mechanism 11 to agglomerate the useful metal in the molten state produced by the melt-treatment onto the matrix particle.

When the treatment target is melt-treated, the useful metal contained in the treatment target is also in the molten state and suspended in the molten slag. When the molten slag flows down toward the slag port, a small amount of useful metal in the molten state has a limited opportunity to contact each other and does not have an opportunity to grow into a larger mass. Therefore, the useful metal conventionally could not be sufficiently separated from slag by a sorting treatment such as specific gravity separation or magnetic separation, which are performed after solidification. However, the supply of the matrix particle into the treatment target enables the minute molten metal suspended in the molten slag to integrate with the useful metal contained in the molten matrix particle or form the alloy with the metal component contained in the matrix particle, ensuring an opportunity to gradually grow into a larger mass. This increases recovery efficiency of the useful metal in the subsequent sorting treatment such as specific gravity separation or magnetic separation.

For example, when metal such as copper or iron mixed in the treatment target is molten, the trace useful metal such as gold, silver, platinum, or a rare metal contained in the treatment target is further adsorbed on the molten metal to be the alloy, and drops from the slag port 7 in a state where can be separated from the slag.

Recovery efficiency of the useful metal separated and recovered from the slag improves as increasing an amount of metal in a molten material or an amount of metal, such as copper or iron which is on an adsorbing side. Therefore, the intentional supply of metal to the treatment target results in efficiently recovering a small amount of useful metal originally contained in the treatment target.

When slag, containing the useful metal or the metal component forming the alloy with the useful metal in the molten state by being molten in the melting furnace, is supplied into the treatment target as the matrix particle, the density of the molten metal suspended in the molten slag increases, and an opportunity to contact between the molten metals increases, allowing the molten metal to agglomerate efficiently to obtain the alloy containing the useful metal. In other words, the agglomeration efficiency is intended to be increased by substantially lengthening the residence time of the molten metal contained in the slag which is the matrix particle, in the melting furnace. Therefore, it has a low value to employ the slag as the matrix particle after the useful metal or the alloy formed with the useful metal and the metal component has been separated.

It is also possible to use the useful metal or the alloy separated from slag molten in the melting furnace as the matrix particle.

Instead of supplying the slag containing the useful metal or the metal component forming the alloy with the useful metal in the molten state as the matrix particle, the supply of the useful metal or the alloy separated from the molten slag into the treatment target as the matrix particle can also increase the density of the molten metal suspended in the molten slag, and increase an opportunity to contact between the molten metals, allowing the molten metal to agglomerate more efficiently. In this case, energy efficiency is improved because the energy for re-melting the slag, which is required when the slag is used as the matrix particle, is no longer necessary.

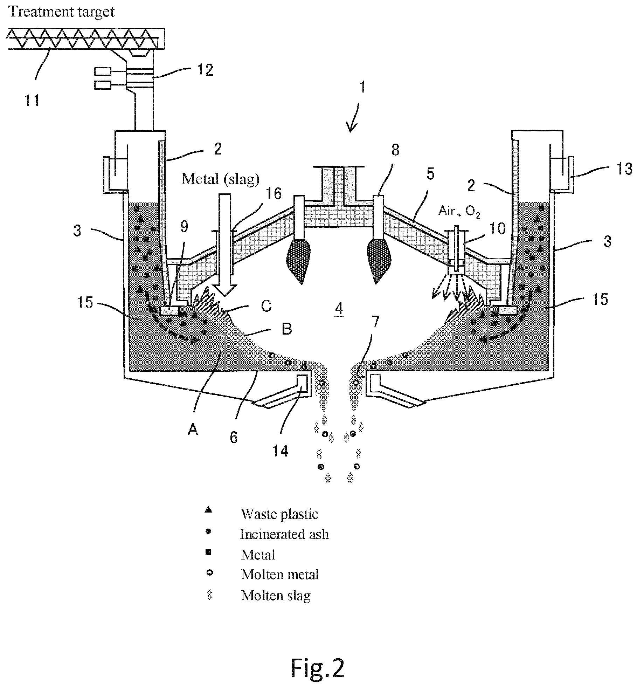

As shown in Fig. 2, a metal supply mechanism 16 may be provided in the furnace ceiling 5 of the melting furnace 1 to configure to supply the matrix particle on a molten surface of the slag to be melt-treated in the melting furnace 1. For example, a guide cylinder for dropping and supplying the matrix particle on an upstream side of the treatment target supplied into the furnace chamber 4 may be provided to configure to supply the matrix particle in a fixed amount by a screw transport mechanism or the like. The matrix particle is uniformly dispersed and supplied on the upstream side of the treatment target, which is annularly distributed in a plan view with the rotation of the outer cylinder 3.

Even if it is difficult to uniformly disperse the matrix particle into the treatment target when the matrix particle of the useful metal is supplied into the treatment target which is conveyed into the storage part 15 by the screw-type conveyor mechanism 11, the matrix particle of the useful metal is supplied on the molten surface of the treatment target supplied into the melting furnace 1, facilitating to uniformly disperse the matrix particle in the molten slag.

In any of the aspects shown in Fig. 1 and Fig. 2, it is preferable to add a reduction auxiliary agent to the treatment target together with the matrix particle of the useful metal.

When the reduction auxiliary agent is added together with the matrix particle of the useful metal, the reduction auxiliary agent is oxidized preferentially over the useful metal, resulting in suppressing the oxidation of the useful metal and increasing the probability of the useful metal dripping out of the slag port in a state of the molten metal.

For example, when copper is used as the matrix particle of the useful metal, aluminum or magnesium can be used as the reduction auxiliary agent. This causes Aluminum or magnesium to preferentially oxidize, and the reduction of metal which is more difficult to oxidize than aluminum and magnesium to promote, resulting in improving recovery efficiency of the useful metal.

It will be understood that an alloy that can be used as the matrix particle is not limited to an alloy containing iron, nickel, and copper, but can be selected according to a useful metal to be recovered, needless to say.

The screw-type conveyor mechanism 11 and the double damper mechanism 12 shown in Fig. 1, and the metal supply mechanism 16 shown in Fig. 2 are each a supply mechanism for supplying the matrix particle of the useful metal.

Although in the examples described above, the case in which the melting furnace 1 applying the method for operating a melting furnace according to the present invention is the rotary surface melting furnace has been described, the present invention can be applied to any melting furnaces other than the rotary surface melting furnace.

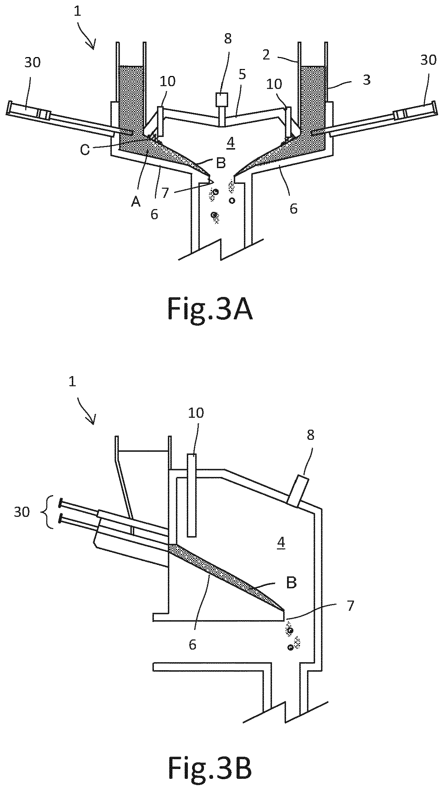

For example, the present invention can also be applied to a surface melting furnace 1 having the slag port 7 formed at the center of the furnace floor 6 and a plurality of push-in supply mechanisms 30 for supplying the treatment target disposed around the furnace floor 6, as shown in Fig. 3A. The surface melting furnace 1 is a type of surface melting furnace in which both the outer cylinder 3 constituted integrally with the furnace floor 6 and the inner cylinder 2 constituted integrated with the furnace ceiling 5 are secured, and the push-in supply mechanisms 30 supply the treatment material into the furnace chamber.

The present invention can also be applied to a surface melting furnace 1 having the slag port 7 formed at the end of the furnace floor 6 and the plurality of push-in supply mechanisms 30 for supplying the treatment target disposed on the opposite side, as shown in Fig. 3B. In any of these surface melting furnaces 1, tips of multi-stage nozzles 10 are disposed so as to be located near the molten surface of the treatment target from an upstream side toward a downstream side of the treatment target pushed into the furnace chamber 4.

The embodiments described above are only one example of the present invention. A specific configuration of each component can be modified and designed as appropriate to the extent that the operations and effects of the present invention can be obtained.

### Reference Signs List

- 1: Surface melting furnace
- 2: Inner cylinder
- 3: Outer cylinder
- 4: Furnace chamber
- 5: Furnace ceiling
- 6: Furnace floor
- 7: Slag port
- 8: Combustion burner
- 9: Feeding blade
- 10: Nozzle
- 11: Screw-type conveyor mechanism (supply mechanism)
- 12: Double damper mechanism (supply mechanism)
- 16: Metal supply mechanism (supply mechanism)
- 15: Storage part
- A: Un-molten treatment target
- B: Molten layer of surface of treatment target
- C: Gasification and combustion part

## Claims

1. A method for operating a melting furnace, comprising a furnace chamber in which a treatment target containing a useful metal is supplied from an upstream side, the treatment target is melt-treated from a surface of the treatment target with a heating mechanism provided to a furnace ceiling to produce molten slag, and the molten slag is caused to flow down to a downstream side; and a slag port discharging the molten slag flowed down, the method comprising:
supplying a matrix particle containing either the useful metal or a metal component forming an alloy with the useful metal in a molten state into the treatment target, to thereby cause molten metal generated by the melt-treatment to aggregate in the matrix particle.

2. The method for operating a melting furnace according to claim 1, wherein slag containing the useful metal, the metal component, or the alloy by being molten in the melting furnace is used as the matrix particle.

3. The method for operating a melting furnace according to claim 1, wherein the useful metal or the alloy separated from slag molten in the melting furnace is used as the matrix particle.

4. The method for operating a melting furnace according to claim 1, wherein the matrix particle is supplied on a molten surface of the treatment target which is melt-treated in the melting furnace.

5. The method for operating a melting furnace according to claim 1, wherein a reduction auxiliary agent is added to the treatment target in addition to the matrix particle.

6. A melting furnace applying the method for operating a melting furnace according to any one of claims 1 to 5,
the melting furnace comprising:
a rotary surface melting furnace, the rotary surface melting furnace comprising:
an inner cylinder dividing the furnace chamber;
an outer cylinder arranged around a periphery of the inner cylinder;
a storage part for a treatment target formed between the inner cylinder and the outer cylinder; and
the furnace chamber in which the treatment target, which is fed out of the storage part into the furnace chamber by relative rotation of the inner cylinder and the outer cylinder, is melt-treated from a surface of the treatment target, and molten slag flows down to be discharged from the slag port formed at the center of a furnace floor; and
a supply mechanism for supplying the matrix particle into the storage part or the furnace chamber.
